# EUROPEAN PATENT SPECIFICATION

(11) **EP 3 135 930 B1**
(45) Date of publication and mention of the grant of the patent: **28.08.2019**
(21) Application number: 15782248.7
(22) Date of filing: 21.04.2015
(51) Int. Cl.: F16C 29/06

(54) **MOTION DEVICE**
BEWEGUNGSVORRICHTUNG
DISPOSITIF À MOUVEMENT

(30) Priority: 23.04.2014 JP 2014089209
(43) Date of publication of application: 01.03.2017
(73) Proprietor: THK CO., LTD., Tokyo 141-8503 (JP)
(72) Inventor: MOCHIZUKI, Hiroaki, Tokyo 141-8503 (JP); KURIBAYASHI, Hiroomi, Tokyo 141-8503 (JP); KANEKO, Akito, Tokyo 141-8503 (JP)
(74) Representative: Grünecker Patent- und Rechtsanwälte PartG mbB
(86) International application number: PCT/JP2015/062070
(87) International publication number: WO 2015/163309

(56) References cited:
- DE-A1- 10 342 841
- DE-A1-102004 043 027
- DE-T2- 69 716 854
- JP-A- H1 047 344
- JP-A- H07 317 762
- JP-A- H07 317 762
- JP-A- H09 133 131
- JP-A- 2013 155 832
- JP-U- S5 920 023
- JP-Y2- S6 121 611

## Description

### TECHNICAL FIELD

The present invention relates to a motion apparatus.

### BACKGROUND ART

A motion apparatus such as a linear guide includes: a track element; a moving element; cover elements; and rolling elements. The moving element is provided with a loaded rolling element rolling path and an unloaded rolling element rolling path. The cover element is provided with a rolling element veering path.

With the cover element being attached to both end faces of the moving element, an interior of a circulation path is formed. With the rolling elements rolling in this interior of the circulation path, the track element and the moving element move relatively to each other.

In the moving element, there is provided a retaining device for preventing the rolling elements from falling off when the moving element is pulled out of the track element. Patent Document 1 below describes one in which a scooping portion for scooping the rolling elements is integrally provided on both ends of the retaining device
in the directions of its movement.

Further motion apparatuses having moving elements with cover elements are known from DE 103 42 841

A1, JP 2013 155832 A, DE 697 16 854 T2, JP H07 317762 A, DE 10 2004 043027 A1.

### RELATED ART DOCUMENT

### PATENT DOCUMENT

Patent Document 1: Japanese Patent Publication No. H01-44925

### SUMMARY

### PROBLEMS TO BE SOLVED BY THE INVENTION

The scooping portion described in Patent Document 1 is provided with a structure that scoops the rolling elements by narrowing the width of the opening. However, the scooping portion provided with this structure receives a force in the direction of widening the opening when collision load caused by the circulation of the rolling elements or other load is added. For example, in the case where the track element is made of a plurality of members joined together, the joint portion(s) are chamfered to remove the corner(s) that make step(s). When a rolling element collides with the chamfered portion, heavy collision load is transmitted to the following rolling elements. The following rolling elements, which have nowhere to escape, try to push wider the openings of the scooping portion and the retaining device. Therefore, in the case where the moving elements change a plurality of track elements, there is a possibility that the scooping portion and the retaining device will be deformed.

Aspects of the present invention have an object to propose a motion apparatus capable of protecting the scooping portion against collision load caused by the circulation of the rolling elements or other load.

### MEANS FOR SOLVING THE PROBLEM

In order to solve the aforementioned problem, a motion apparatus having the features defined in claim 1. Further preferred embodiments are defined in the dependent claims.

### ADVANTAGE OF THE INVENTION

According to the aspects of the present invention, the motion apparatus is capable of protecting the scooping portion against collision load caused by the circulation of the rolling elements or other load.

### BRIEF DESCRIPTION OF THE DRAWINGS

FIG. 1 is a perspective view showing a linear guide according to an embodiment of the present invention.
FIG. 2 is a front view (partial cross-sectional view) showing the linear guide.
FIGS. 3 are diagrams showing a track rail, of which (a) is a top view and (b) is a cross-sectional view taken along IIIb-IIIb.
FIGS. 4 are diagrams showing a slider, of which (a) is a perspective view and (b) is an inner side view.
FIG. 5(a) is a perspective view showing a block. FIG. 5(b) is a perspective view showing an end plate.
FIGS. 6 are diagrams showing the block, of which (a) is a front view, (b) is a cross-scctional view taken along VIIIb-VIIIb, and (c) is a cross-sectional view taken along VIIIc-VIIIc.
FIGS. 7 are diagrams showing the end plate, of which (a) is a front view, (b) is a top view, (c) is an inner side view, (d) is a rear view, and (e) is a view when seen in the direction of arrow VIIe.
FIGS. 8 are diagrams showing the end plate, of which (a) is a cross-sectional view of FIG. 7(d) taken along IXa-IXa and (b) is a cross-sectional view of FIG. 7(d) taken along IXb-IXb.

### DESCRIPTION OF THE EMBODIMENTS

A linear guide 1 according to an embodiment of the present invention will be described with reference to the drawings.

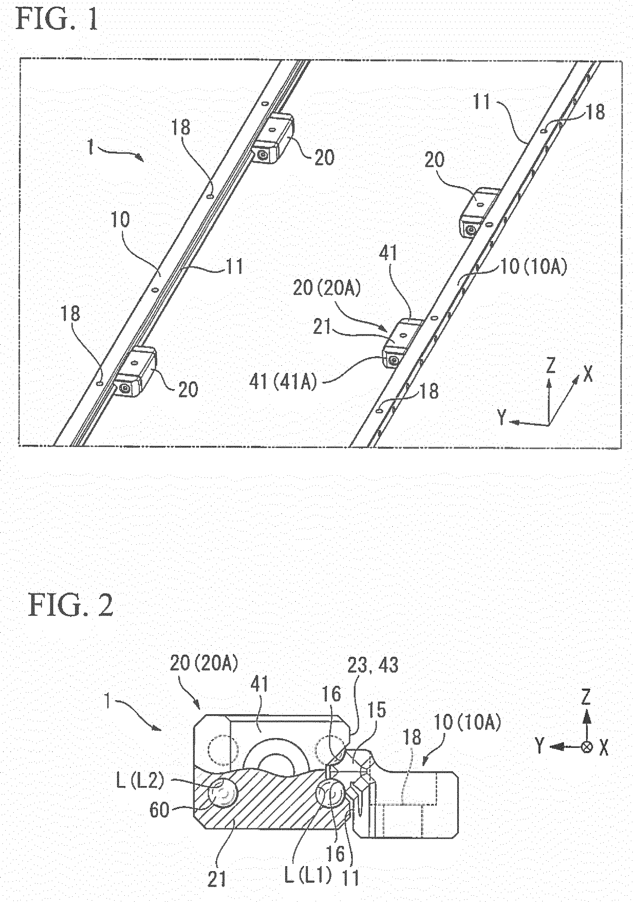

FIG 1 is a perspective view of the linear guide 1 according to the embodiment of the present invention.

FIG. 2 is a front view (partial cross-sectional view) showing the linear guide 1.

The linear guide (motion apparatus) 1 includes a pair of track rails 10, a plurality of (four) sliders 20, and so on.

The four sliders 20 is attached so as to be slidable along the pair of track rails 10. To a single track rail 10, two sliders 20 are attached. The four sliders 20 are coupled via coupling members (not shown in the figures).

The direction in which the track rail 10 extends (the direction of movement of the slider 20) is referred to as X direction. The direction in which the track rail 10 and the slider 20 are stacked on each other is referred to as Y direction (thickness direction). The direction vertical to the X direction and to the Y direction is referred to as Z direction (width direction). The X direction, the Y direction, and the Z direction are orthogonal to one another.

A center of the X direction designates a direction toward a screw hole 33. Outer sides of the X direction designate directions away from the screw hole 33.

A center of the Y direction or the Z direction designates a direction toward a screw hole 32. Outer sides of the Y direction or the Z direction designate directions away from the screw hole 32.

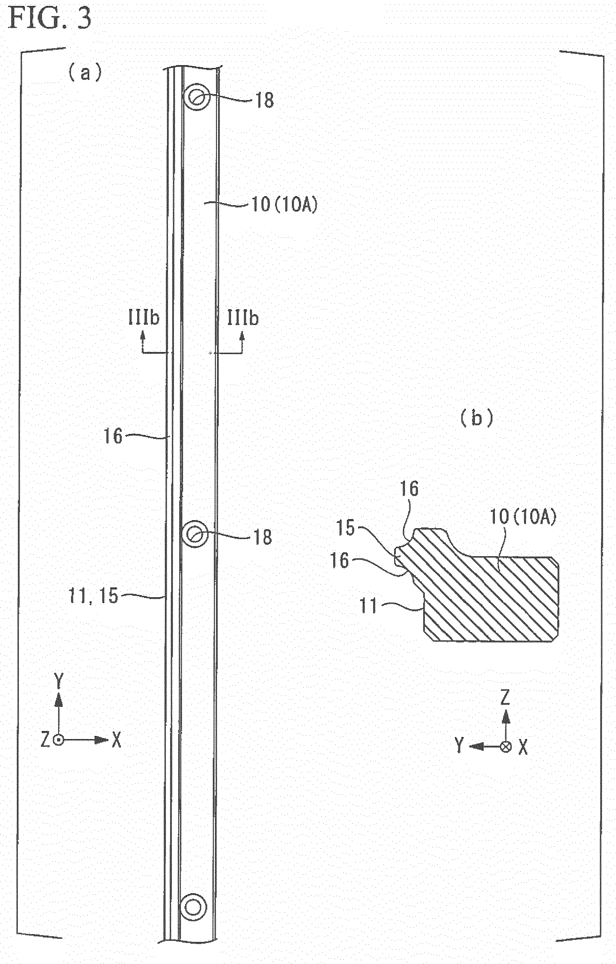

FIGS. 3 are diagrams showing the track rail 10, of which (a) is a top view and (b) is a cross-sectional view taken along IIIb-IIIb.

The pair of track rails 10 have shapes that are linearly symmetrical in the X direction. Of the pair of track rails 10, a track rail 10A (see FIG. 1) will be described below.

The track rail (track element) 10 is a member made of iron and steel that extends in the X direction, whose cross-section vertical to the X direction is formed in a substantially rectangular shape.

Of the outer circumferential surface of the track rail 10A, an inner side surface 11 that faces in the +Y direction is provided with a protrusion portion 15, which protrudes in the +Y direction in a substantially triangular shape, along the X direction. On the protrusion portion 15, there is provided a pair of rolling element rolling surfaces 16 that extend in the X direction. The pair of rolling element rolling surfaces 16 are formed on the protrusion portion 15 so as to be back to back to each other at approximately 90 degrees.

In the track rail 10A, there are provided a plurality of bolt attachment holes 18, which penetrate in the Z direction, in a spaced manner in the X direction. The track rail 10A is fixed to (installed on) a base member or the like (not shown in the figures) with bolts (not shown in the figures) that have been inserted through the bolt attachment holes 18.

The two track rails 10 are installed in a parallel manner with the inner side surfaces 11 facing each other.

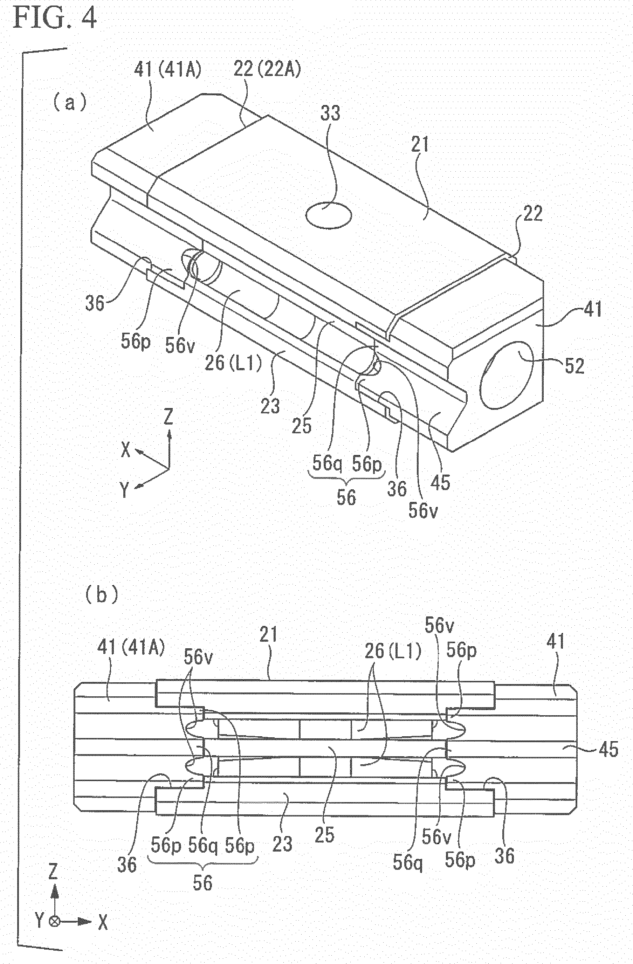

FIGS. 4 are diagrams showing the slider 20, of which (a) is a perspective view and (b) is an inner side view.

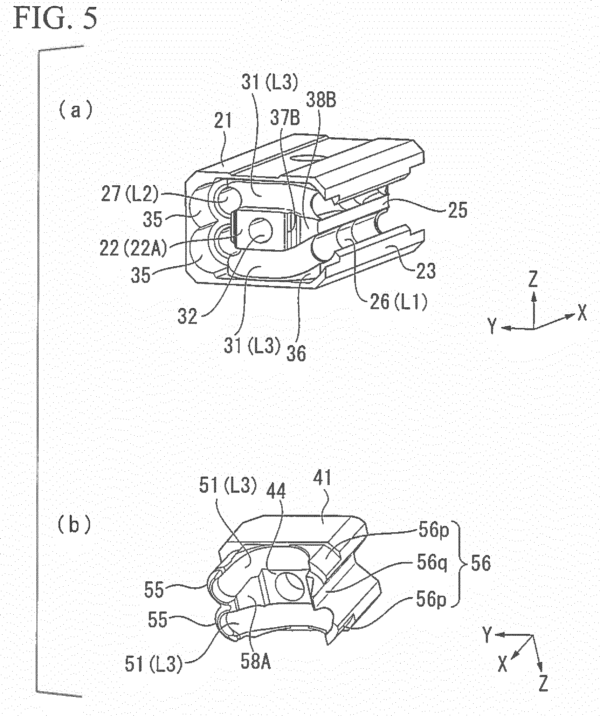

FIG. 5(a) is a perspective view showing a block 21. FIG. 5(b) is a perspective view showing an end plate 41.

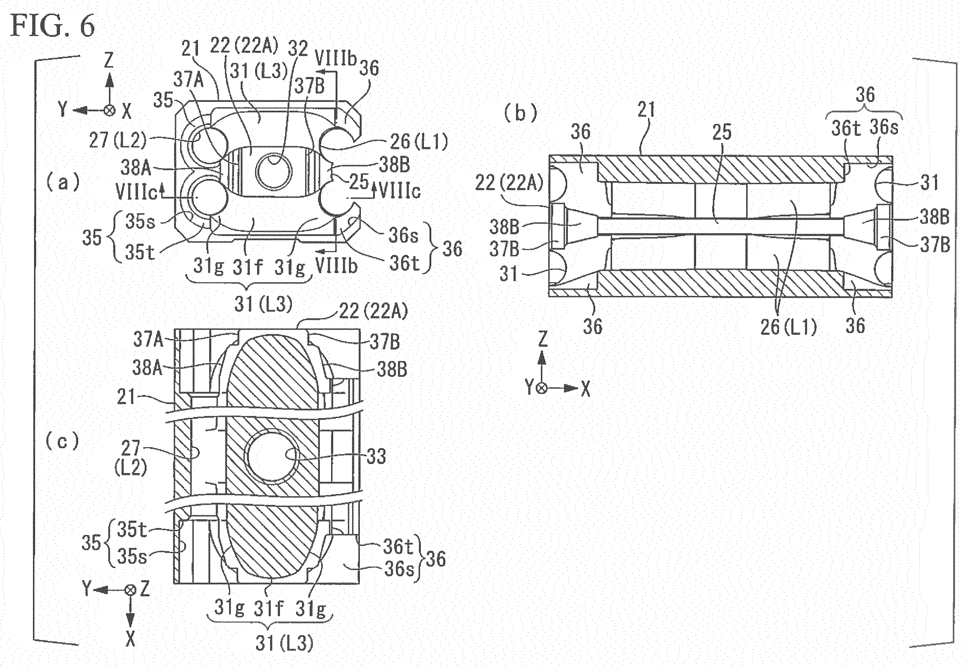

FIGS. 6 are diagrams showing the block 21, of which (a) is a front view, (b) is a cross-sectional view taken along VIIIb-VIIIb, and (c) is a cross-sectional view taken along VIIIc-VIIIc.

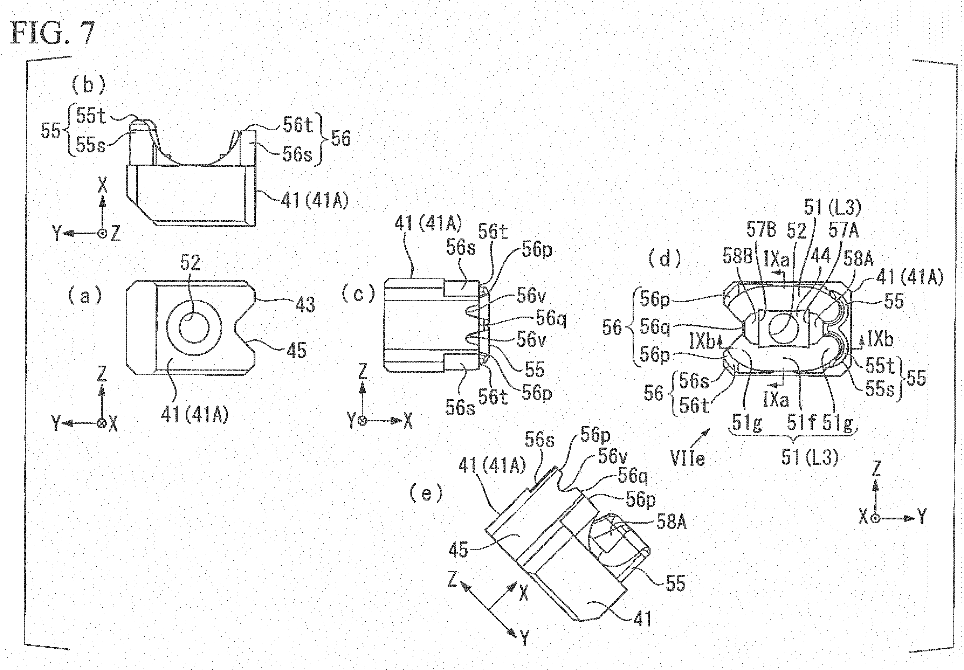

FIGS. 7 arc diagrams showing the end plate 41, of which (a) is a front view, (b) is a top view, (c) is an inner side view, (d) is a rear view, and (e) is a view when seen in the direction of arrow VIIe.

The four sliders 20 have the same shape. Of the four sliders 20, a slider 20A (see FIG. 1) will be described below.

A pair of end plates 41 has the same shape. Of the pair of end plates 41, an end plate 41A (see FIGS. 4(a), 4(b)) will be described below.

The slider 20 includes a cuboid block 21, a pair of end plates 41, and so on.

The pair of end plates 41 are attached to both end faces 22 of the block 21 in the X direction on one-on-one basis.

The slider 20 further includes a plurality of balls 60. In an interior of the slider 20, there are formed two endless cyclic paths L that have an oval annular shape or elliptic annular shape with no ends. The plurality of balls 60 are rollably held in the interior of the two endless cyclic paths L.

The endless cyclic path L is made of: a pair of linear portions that extend in the X direction; and a pair of half-arc curve portions that couple the end portions of the pair of linear portions to each other. A first of the linear portions is a loaded rolling element passage L1 while a second thereof is an unloaded rolling element passage L2. The pair of half-arc curve portions are rolling element veering paths L3.

The block (moving element) 21 is a member made of metal that extends in the X direction, whose cross-section vertical to the X direction is formed in a substantially rectangular shape.

In an inner side surface 23 of the block 21, there is provided a recess portion 25, which is recessed in a substantially triangular shape in the +Y direction, along the X direction so as to face the protrusion portion 15 of the track rail 10. With respect to the recess portion 25, the protrusion portion 15 of the track rail 10 is arranged with a slight gap therebetween.

On this recess portion 25, there are provided a pair of rolling element rolling surfaces 26 that extend along the X direction. The pair of rolling element rolling surfaces 26 are formed on the recess portion 25 so as to be face to face with each other at approximately 90 degrees.

In the block 21, there are formed, by penetration, two circular unloaded rolling element passages L2 (through-holes 27) that extend along the X direction.

In the end face 22 of the block 21, there are formed veering path inner circumferential surfaces (inner circumferential surfaces) 31, each of which is a part of each rolling element veering path L3. Each of these veering path inner circumferential surfaces 31 is formed so that the corresponding rolling element rolling surface 26 (loaded rolling element passage L1) and the corresponding unloaded rolling element passage L2 are continuously linked.

When the track rail 10 is attached to the slider 20 (block 21), the two rolling element rolling surfaces 16 of the track rail 10 and the two rolling element rolling surfaces 26 of the block 21 are arranged in an opposed manner.

Then, each space (circular hole that extends in the X direction) that is formed between each rolling element rolling surface 16 and the corresponding rolling element rolling surface 26 becomes the loaded rolling element passage L1.

The end plate (cover element) 41 is a flat-plate-like molded member made of resin, and is fixed to the end face 22 of the block 21.

Similarly to the block 21, the end plate 41 is formed so that its cross-section vertical to the X direction has a substantially rectangular shape. An inner side surface 43 of the end plate 41 is provided with a recess portion 45, which is recessed in a substantially triangular shape in the +Y direction, along the X direction so as to face the protrusion portion 15 of the track rail 10. With respect to the recess portion 45, the protrusion portion 15 of the track rail 10 is arranged with a slight gap therebetween.

A rear surface (opposed surface) 44 of the end plate 41 is a surface that is opposed to the end face 22 of the block 21.

On the rear surface 44, there are formed veering path outer circumferential surfaces (outer circumferential surfaces) 51, each of which is a part of each rolling element veering path L3.

When the end plate 41 is attached to the block 21, the veering path inner circumferential surfaces 31 of the block 21 and the veering path outer circumferential surfaces 51 of the end plate 41 face each other and are put together. The veering path outer circumferential surface 51 is connected so as to be continuously linked to the loaded rolling element passage L1 and unloaded rolling element passage L2 of the block 21.

Then, the space formed by the veering path inner circumferential surface 31 and the veering path outer circumferential surface 51 (circular hole that curves in a half arc) becomes the rolling element veering path L3.

The ball (rolling element) 60 is a spherical member made of metal. The plurality of balls 60 is interposed between the track rail 10 and the slider 20 (in the loaded rolling element passage L1), and allows the slider 20 to move smoothly with respect to the track rail 10.

The plurality of balls 60 is disposed in the endless cyclic path L with substantially no gap between each other, and circulates in the endless cyclic path L. Via the plurality of balls 60, the slider 20 is supported so as to be reciprocally movable along the track rail 10.

A detailed shape of the block 21 will be described.

The end face 22 that faces in the +X direction and the end face 22 that faces in the -X direction are the same in shape. Of the block 21, the shape of the end face 22A (see FIG. 5(a)) that faces in the -X direction will be described below.

As shown in FIG. 6(a), at the center of the end face 22A of the block 21, there is provided a screw hole 32. Into this screw hole 32, a bolt (not shown in the figure) is screwed when the end plate 41A is attached.

On the +Y direction side of the end face 22A, the two unloaded rolling clement passages L2 (through-holes 27) open so as to be aligned in the Z direction.

On the -Y direction side of the end face 22A, the two loaded rolling element passages L1 (rolling element rolling surfaces 26) open so as to be aligned in the Z direction. The two rolling element rolling surfaces 26 open in the end face 22A so as to be in an arc shape at an angle of 180 degrees or greater.

In the end face 22A, the veering path inner circumferential surfaces 31 of the two rolling element veering paths L3 open (are exposed) along the Y direction. The two veering path inner circumferential surfaces 31 are formed on both sides across the screw hole 32 in a linearly symmetrical manner in the Z direction. The two veering path inner circumferential surfaces 31 bend in an arched line. The two veering path inner circumferential surfaces 31 are linear (inner circumferential surfaces 31f) at the center of the end face 22A in the Y direction, and are arc-like (inner circumferential surfaces 31g) on the outer sides of the end face 22A in the Y direction. The veering path inner circumferential surface 31 is continuously linked both to the through-hole 27 and to the rolling element rolling surface 26.

As shown in FIG. 6(b), in the recess portion 25, the two loaded rolling element passage L1 (rolling element rolling surfaces 26) are formed linearly along the X direction.

To each of both ends of the rolling element rolling surface 26, the veering path inner circumferential surface 31 (inner circumferential surface 31g) of the rolling element veering path L3 is continuously linked. In the recess portion 25, the veering path inner circumferential surfaces 31 (inner circumferential surfaces 31g) gradually extend further toward the outer sides in the Z direction as they extend further in the outer sides in the X direction. Namely, the two veering path inner circumferential surfaces 31 extend in the directions of spacing apart from each other.

As shown in FIG. 6(c), at the center of the block 21, there is provided a screw hole 33. Into this screw hole 33, a bolt (not shown in the figure) is screwed when a coupling member or the like (not shown in the figure) is attached to the block 21 (slider 20).

As shown in FIG. 6(a), in the +Y direction of the block 21, the unloaded rolling element passages L2 (through-holes 27) penetrate linearly along the X direction.

In the -Y direction of the block 21, the loaded rolling element passages L1 (rolling element rolling surfaces 26) penetrate linearly along the X direction.

To each of both ends of the loaded rolling element passage L1 and the unloaded rolling element passage L2, each of the veering path inner circumferential surfaces 31 (inner circumferential surfaces 31g) of the rolling clement veering paths L3 is continuously linked. The veering path inner circumferential surface 31 (inner circumferential surface 31g) gradually extend further to the center (inner circumferential surface 31f) in the Y direction as it extends further toward the outer sides in the X direction.

Thus, when seen in the Z direction, the veering path inner circumferential surface 31 of the rolling element veering path L3 bends in a half-arc curvature that is continuously linked to the loaded rolling element passage L1 (rolling element rolling surface 26) and the unloaded rolling element passage L2 (through-hole 27).

Furthermore, when seen in the X direction, the veering path inner circumferential surface 31 of the rolling element veering path L3 is linear at the center (inner circumferential surface 31f), and bends in an arched line on the outer sides (inner circumferential surfaces 31g).

As shown in FIG. 6(a), on the outsides of the through-hole 27 and the inner circumferential surface 31g, there is provided a space (guide piece container portion 35) that is formed in a recessed shape from the end face 22A toward the X direction. The guide piece container portions 35 are formed in a shape like two arcs linked together.

This guide piece container portion 35 is the space in which a guide piece 55 (described later) of the end plate 41 is to be contained.

As shown in FIG. 6(c), the guide piece container portion 35 is formed along the inner circumferential surface 31g. Therefore, the guide piece container portion 35 is formed so as to be gradually carved deeper toward the X direction as it extends further toward the outer side in the Y direction.

On an inner side surface of the guide piece container portion 35, there is formed a sliding-contact surface 35s that faces the through-hole 27. This sliding-contact surface 35s is to be in abutment (sliding contact) with an outer side surface 55s of the guide piece 55 of the end plate 41.

At the deepest portion of the guide piece container portion 35, there is formed a bottom surface 35t that is vertical to the X direction. This bottom surface 35t is opposed to a front end surface 55t of the guide piece 55 of the end plate 41.

As shown in FIG. 6(a), on the outsides of the rolling element rolling surfaces 26 and the inner circumferential surfaces 31g, there are provided spaces (scooping piece container portions 36) that are formed from the end face 22A toward the +X direction. The scooping piece container portion 36 is formed in a shape that is along the outer circumferential surface of the block 21.

The scooping piece container portions 36 are for covering a scooping piece 56 (described later) of the end plate 41. In the present embodiment, the scooping piece container portions 36 are provided as a recess portion into which the scooping piece 56 is to be inserted.

As shown in FIG. 6(b), the scooping piece container portion 36 is provided on a side in the Z direction outer than the rolling element rolling surfaces 26.

As shown in FIG. 6(c), the scooping piece container portion 36 is formed along the inner circumferential surface 31g. Therefore, the scooping piece container portion 36 is formed so as to be gradually carved deeper in the X direction as it extends further toward the outer side in the Y direction.

On an inner side surface of the scooping piece container portion 36, there is formed a first abutment surface 36s that faces the rolling element rolling surface 26. The first abutment surface 36s faces to the center of the Z direction and the Y direction. This first abutment surface 36s is to be in abutment with an outer side surface 56s of the scooping piece 56 (outer piece 56p) of the end plate 41.

At the deepest portion of the scooping piece container portion 36, there is formed a second abutment surface 36t that is vertical to the X direction. This second abutment surface 36t is to be in abutment with a front end surface 56t of the scooping piece 56 (outer piece 56p) of the end plate 41.

As shown in FIG. 6(a), the scooping piece container portion 36 is formed wide so as to be closer to the outer circumferential surface of the block 21 than the guide piece container portion 35. Therefore, the scooping piece container portion 36 is capable of containing a thicker member than the guide piece container portion 35 is. In other words, the member (scooping pieces 56) to be contained in the scooping piece container portions 36 is thicker than the member (guide pieces 55) to be contained in the guide piece container portions 35.

As shown in FIG. 6(c), the guide piece container portion 35 (bottom surface 35t) is formed to as to be carved deeper toward the X direction than the scooping piece container portion 36 (second abutment surface 36t). Therefore, when the end plate 41 is attached to the block 21, the guide piece container portions 35 are capable of containing the guide pieces 55 earlier than the scooping piece container portion 36 is. In other words, when the end plate 41 is attached to the block 21, the guide pieces 55 are contained into the guide piece container portions 35 before the scooping piece 56 is contained into the scooping piece container portion 36.

As shown in FIG. 6(a), on both sides (outer sides) of the screw hole 32 of the end face 22A in the Y direction, there are respectively provided positioning surfaces 37A, 37B that face to the outer sides in the Y direction. These two positioning surfaces 37A, 37B are vertically dug from the end face 22A toward the +X direction, and hence, is formed in a parallel manner so as to be back to back to each other.

The two positioning surfaces 37A, 37B have a function of inhibiting the movement in the Y direction and rotation about the X direction of (a function of positioning) the end plate 41 when the end plate 41 is attached to the block 21.

As shown in FIGS. 6(a), 6(c), on the outer sides of the two positioning surfaces 37A, 37B in the Y direction, there are respectively provided inclined surfaces 38A, 38B that are formed so as to be gradually deeper toward the +X direction.

The inclined surface 38A is formed so as to be linked to the positioning surface 37A. The inclined surface 38B is formed so as to be linked to the positioning surface 37B and the bottom portion of the recess portion 25.

The two inclined surfaces 38A, 38B have a function of increasing the guide piece 55 and the scooping piece 56 (central piece 56q) in thickness. With the inclined surfaces 38A, 38B being provided, the spaces in which the guide piece 55 and the scooping piece 56 (central piece 56q) are arranged is made larger. Therefore, it is possible to increase the guide piece 55 and the scooping piece 56 (central piece 56q) in thickness.

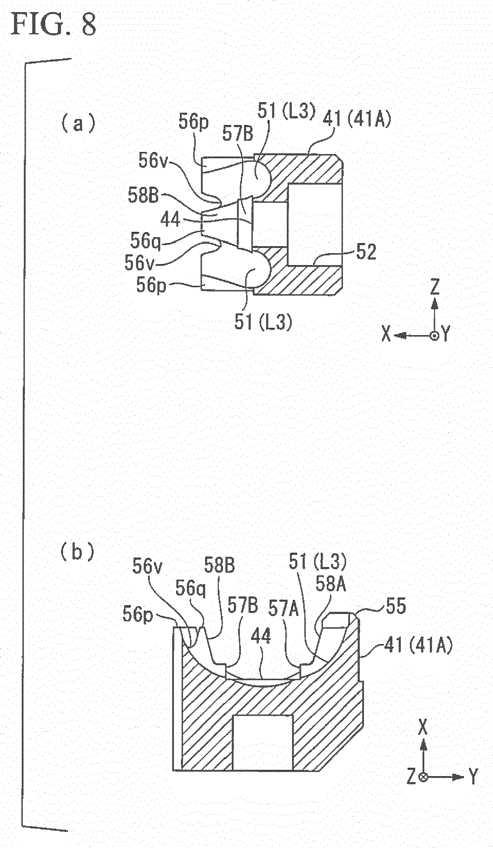

Next is a description of a detailed shape of the end plate 41 with additional reference to FIG. 8.

FIGS. 8 are diagrams showing the end plate 41, of which (a) is a cross-sectional view of FIG. 7(d) taken along IXa-IXa and (b) is a cross-sectional view of FIG. 7(d) taken along IXb-IXb.

As shown in FIG. 7(d), at the center of the rear surface 44 of the end plate 41A, there is provided a bolt penetration hole 52. Through this bolt penetration hole 52, a bolt (not shown in the figure) is penetrated when the end plate 41 is attached to the block 21.

In the rear surface 44, the veering path outer circumferential surfaces 51 of the two rolling element veering paths L3 open (are exposed) along the Y direction. The two veering path outer circumferential surfaces 51 are formed on both sides across the bolt penetration hole 52 so as to be linearly symmetrical in the Z direction. The two veering path outer circumferential surfaces 51 bend in an arched line. The two veering path outer circumferential surfaces 51 are linear (outer circumferential surfaces 51f) at the center of the rear surface 44 in the Y direction, and are arc-like (outer circumferential surfaces 51g) on the outer sides of the rear surface 44 in the Y direction.

The two veering path outer circumferential surfaces 51 are formed correspondingly to the two veering path inner circumferential surfaces 31 of the block 21 on one-on-one basis.

As shown in FIG 8(b), the veering path outer circumferential surface 51 is formed in a half-arc-like shape.

As shown in FIG. 7(d), the outer circumferential surface 51f is carved deeper in the -X direction than the rear surface 44, and gradually protrudes further in the +X direction as it extends further toward the outer sides in the Y direction. The outer circumferential surface 51g protrudes further in the +X direction as it extends further toward the outer sides in the Y direction.

As shown in FIG. 7(d) and FIG. 8(a), as it protrudes further in the +X direction than the rear surface 44, the veering path outer circumferential surface 51 gradually extends further to the center in the Z direction. Namely, the two veering path outer circumferential surfaces 51 extend in the directions of approaching each other.

Thus, when seen in the Z direction, the veering path outer circumferential surface 51 of the rolling element veering path L3 bends in a half-arc curvature.

Furthermore, when seen in the X direction, the veering path outer circumferential surface 51 of the rolling element veering path L3 is linear at the center (outer circumferential surface 51f), and bends in an arched line on the outer sides (outer circumferential surfaces 51g).

As shown in FIG. 7(d), on the outer side of the outer circumferential surface 51g in the +Y direction, there is provided a section (guide piece 55) that is formed in a shape protruding from the rear surface 44 toward the +X direction. The guide pieces 55 are formed in a shape like two arcs linked together.

The guide piece 55 is a section that is to be contained in the aforementioned guide piece container portion 35 of the block 21.

The guide piece 55 is formed along the outer circumferential surface 51g. Therefore, the guide piece 55 is formed so as to be gradually elevated higher in the +X direction as it is direction toward the outer side in the Y direction (see FIG. 7(b)).

On an outer side surface of the guide piece 55, there is formed an outer side surface 55s that faces to the outer side in the Y direction. This outer side surface 55s is to be in abutment with the sliding-contact surface 35s of the guide piece container portion 35 of the block 21.

On a foremost end of the guide piece 55, there is formed a front end surface 55t that faces in the +X direction. This front end surface 55t is opposed to the bottom surface 35t of the guide piece container portion 35 of the block 21.

As shown in FIG. 7(d) and FIG. 8(b), on an outside of the outer circumferential surfaces 51g in the -Y direction, there is provided a section (scooping piece 56) that is formed in a shape protruding from the rear surface 44 toward the +X direction. The scooping piece 56 is arranged so as to be linked to the recess portion 45 (see FIG. 4(a)).

The scooping piece 56 is formed in a shape (boat-bottom-like shape) whose space between its sides in the Z direction is gradually narrower toward a direction of travel of the balls 60. In the present embodiment, the scooping piece 56 has: two outer pieces 56p that are arranged on the outer sides in the Z direction; and a single central piece 56q that is arranged at the center in the Z direction, and two bottom portions (boat bottoms) are formed in a row (see FIG. 4(b)).

When seen in the direction as shown in FIG. 7(c), the outer piece 56p is formed in a predetermined shape (substantially J-shape, for example). The outer piece 56p is a section that is to be contained in the aforementioned scooping piece container portion 36 of the block.

When seen in the direction as shown in FIG. 7(c), the central piece 56q is formed in a predetermined shape (a substantially triangular shape, for example). The central piece 56q is a section that is arranged along the aforementioned inclined surface 38B of the block.

These outer pieces 56p and central piece 56q are integrally provided.

As shown in FIG. 4(b), between the outer pieces 56p and the central piece 56q, there are each provided a slit (opening) 56v that is incised in the -X direction. In the scooping piece 56 that is provided so as to protrude toward the block 21, the slit 56v is gradually narrower in width toward the side opposite to the side to which the scooping piece 56 protrudes. In the present embodiment, a plurality of (two) slits 56v are formed in correspondence to the plurality of (two) endless cyclic paths L.

This slit 56v has a function of causing the balls 60, which are travelling in the loaded rolling element passage L1 of the block 21, to gradually transfer to the unloaded rolling clement passage L2 of the end plate 41. When transferring from the loaded rolling element passage L1 to the unloaded rolling element passage L2, the balls 60 move forward in the slit 56v of the scooping piece 56 and are gradually scooped from the loaded rolling element passage L1.

As shown in FIG. 7(d), the scooping piece 56 is formed along the outer circumferential surfaces 51g. Therefore, the scooping piece 56 is formed so as to gradually protrude higher toward the +X direction as it extends further toward the outer side in the Y direction.

As shown in FIG. 7(c), on an outer side surface of the outer piece 56p of the scooping piece 56, there is formed an outer side surface 56s that faces to an outer side in the Z direction and the Y direction. This first abutment surface (outer side surface) 56s is brought into abutment with the first abutment surface 36s of the scooping piece container portion 36 of the block 21.

On a foremost end of the outer piece 56p of the scooping piece 56, there is formed a front end surface 56t that faces in the +X direction.

This second abutment surface (front end surface) 56t is brought into abutment with the second abutment surface 36t of the scooping piece container portion 36 of the block 21.

Thus, the outer pieces 56p of the scooping piece 56 are covered with the scooping piece container portions 36 of the block 21 while the first abutment surfaces 56s are in abutment with the first abutment surfaces 36s and the second abutment surfaces 56t are in abutment with the second abutment surfaces 36t.

As shown in FIG. 7(d), the outer piece 56p of the scooping piece 56 is formed thicker than the guide piece 55. As described above, the scooping piece container portion 36 is formed wider than the guide piece container portion 35 (see FIG. 6(a)). Therefore, it is possible to make the outer piece 56p of the scooping piece 56 thicker than the guide piece 55. Consequently, it is possible to enhance the strength of the outer piece 56p.

As shown in FIG. 7(b), the guide piece 55 is formed so as to protrude higher than the scooping piece 56 toward the +X direction. As a result, when the end plate 41 is attached to the block 21, the guide pieces 55 are contained into the guide piece container portions 35 before the the scooping piece 56 is contained into the scooping piece container portions 36. Therefore, when the end plate 41 is attached to the block 21, the guide pieces 55 and the guide piece container portions 35 operate as a guide mechanism.

As shown in FIG. 7(d) and FIG. 8(b), on both sides (outer sides) of the bolt penetration hole 52 of the rear surface 44 in the Y direction, there are respectively provided positioned surfaces 57A, 57B that face to the center of the Y direction. These two positioned surfaces 57A, 57B are formed in a parallel manner so as to vertically rise from the rear surface 44 toward the +X direction and to face each other.

When the end plate 41 is attached to the block 21, these two positioned surfaces 57A, 57B are brought into close contact with the positioning surfaces 37A, 37B of the block 21, respectively. As a result, the movement in the Y direction and rotation about the X direction of the end plate 41 is inhibited (the end plate 41 is positioned).

As shown in FIG. 7(d) and FIG. 8(b), on the outer sides of the two positioned surfaces 57A, 57B in the Y direction, there are respectively formed inclined surfaces 58A, 58B that gradually protrude toward the +X direction.

The inclined surface 58A is formed so as to be linked to the positioned surface 57A and the guide pieces 55. The inclined surface 58B is formed so as to be linked to the positioned surface 57B and the central piece 56q of the scooping piece 56.

These two inclined surfaces 58A, 58B are formed so as to be along the inclined surfaces 38A, 38B of the block 21, respectively. As a result, it is possible to increase both the guide piece 55 and the scooping piece 56 (central piece 56q) in thickness. Therefore, it is possible to enhance the strength of the guide piece 55 and the scooping piece 56 (central piece 56q).

Subsequently, a step of attaching the end plate 41 to the block 21 will be described,

Below, the description will be started with the end plate 41 being already attached to the end face 22 in the +X direction of the block 21.

Firstly, the block 21 is mounted onto a workbench or the like so that the end plate 41 is on the lower side.

Next, from the rolling element rolling surfaces 26 and the through-holes 27 that open in the end face 22A in the -X direction of the block 21, a plurality of balls 60 is inserted toward the endless cyclic paths L. Also in the veering path inner circumferential surfaces 31 of the rolling element veering paths L3 that are exposed to the end face 22A of the block 21, a plurality of balls 60 is inserted (arranged). Thus, a plurality of balls 60 is arranged in the whole area of the endless cyclic paths L.

The rolling element rolling surface 26 is formed in an arc shape with an angle of 180 degrees or greater. Therefore, the plurality of balls 60 will not drop off from the rolling element rolling surface 26 to the recess portion 25 side.

The veering path inner circumferential surface 31 of the block 21 is formed so as to be carved from the end face 22A toward the +X direction. Therefore, even before the attachment of the end plate 41, the balls 60 will not drop off from the veering path inner circumferential surface 31.

On the outer circumferential sides of the through-holes 27, the sliding-contact surfaces 35s (guide piece container portions 35), which are formed in a shape like two arcs linked together, are provided. Therefore, a ball 60 that is to be inserted into a first of the through-holes 27 will not be inserted into a second of the through-holes 27, which is adjacent to the first. The ball 60 that is to be inserted into the first through-hole 27 falls down along the sliding-contact surface 35s. Therefore, the balls 60 will not be erroneously inserted into the adjacent, second through-hole 27.

Lastly, the end plate 41A is attached to the end face 22A of the block 21.

In attaching the end plate 41, firstly the guide pieces 55 of the end plate 41 are caused to face the guide piece container portions 35 of the block 21, and the scooping piece 56 is caused to face the scooping piece container portions 36.

Next, when the end plate 41A is moved in the +X direction toward the block 21, the guide pieces 55 start to be contained in the guide piece container portions 35 before the scooping piece 56 starts to be contained in the scooping piece container portions 36. This is because the guide piece 55 is formed so as to protrude higher toward the +X direction than the scooping piece 56.

When the end plate 41A is further moved in the +X direction toward the block 21, the outer side surfaces 55s of the guide pieces 55 are brought into sliding contact with the sliding-contact surfaces 35s of the guide piece container portions 35.

Therefore, when the block 21 is attached to the end plate 41A, the guide pieces 55 and the guide piece container portions 35 operate as a guide mechanism for containing the scooping piece 56 into scooping piece container portion 36.

Especially, the outer pieces 56p of the scooping piece 56 are thin in thickness, and hence, is likely to be damaged at the time of assembly. However, in the slider 20, the end plate 41 and the block 21 are provided with a guide mechanism made of the guide pieces 55 and the guide piece container portions 35. Therefore, without causing damage to the outer pieces 56p of the scooping piece 56, it is possible to attach the end plate 41 to the end face 22 of the block 21.

Next, the rear surface 44 of the end plate 41A is brought into abutment with the end face 22 of the block 21.

As a result, with the pair of positioning surfaces 37A, 37B of the block 21, the pair of positioned surfaces 57A, 57B of the end plate 41A is brought into close contact. Because the positioned surfaces 57A, 57B are in close contact with the positioning surfaces 37A, 37B, the end plate 41A is inhibited from moving in the Y direction and rotating about the X direction with respect to the block 21. Namely, the end plate 41A is positioned with respect to the block 21 in the Y direction and about the X direction.

As a result of the end plate 41 A being positioned with respect to the block 21 in the Y direction and the like, the veering path inner circumferential surfaces 31 and the veering path outer circumferential surfaces 51 correctly face each other and are put together. Therefore, smooth rolling element veering paths L3 are formed. Furthermore, the rolling element veering path L3 is correctly coupled to the loaded rolling element passage L1 and the unloaded rolling element passage L2. Therefore, endless cyclic paths L with no step are formed.

Finally, through the bolt penetration hole 52 of the end plate 41A, a bolt (not shown in the figure) is inserted, and is then screwed into the screw hole 32 of the block 21.

Thus, the end plate 41A is attached to the block 21.

When the end plate 41A is attached to the block 21, the outer side surfaces 56s of the outer pieces 56p of the scooping piece 56 are brought into abutment with the first abutment surface 36s of the scooping piece container portion 36. At the same time, the front end surfaces 56t of the outer pieces 56p of the scooping piece 56 arc brought into abutment with the second abutment surfaces 36t of the scooping piece container portions 36.

When the plurality of balls 60 circulates in the endless cyclic path L, the outer piece 56p of the scooping piece 56 receives forces that act from the balls 60 to the outer sides in the Y direction and the Z direction.

Because thin in thickness, the outer piece 56p of the scooping piece 56 is likely to be damaged (deformed) when it receives a force from the balls 60. If the outer piece 56p is damaged, the balls 60 drop off from the endless cyclic path L.

However, in the slider 20, the outer pieces 56p of the scooping piece 56 are contained into the scooping piece container portions 36 of the block 21. Furthermore, the outer side surfaces 56s are in abutment with the first abutment surfaces 36s, and the front end surfaces 56t are in abutment with the second abutment surfaces 36t. As a result, even if the outer piece 56p of the scooping piece 56 receives a force from the balls 60, the outer piece 56p will not be damaged (deformed) because the outer piece 56p is supported by the scooping piece container portion 36 (first abutment surface 36s, second abutment surface 36t). Therefore, the balls 60 will not drop off from the endless cyclic path L.

Although not contained in the scooping piece container portion 36, the central piece 56q of the scooping piece 56 is allowed to be formed so as to be gradually thicker toward a side opposite to the side that protrudes toward the block 21 because the block 21 is provided with the inclined surface 38B. As a result, even if the central piece 56q of the scooping piece 56 receives a force from the balls 60, the central piece 56q will not be damaged (deformed). Therefore, the balls 60 will not drop off from the endless cyclic path L.

In the linear guide 1 according to the present embodiment, the outer pieces 56p of the scooping piece 56 of the end plate 41 are covered with the scooping piece container portions 36 of the block 21. According to this structure, the outer pieces 56p are inserted into the scooping piece container portions 36 that are provided as a recess portion. Therefore, even if collision load or external load is applied from the balls 60, the slit 56v is unlikely to be widened. Furthermore, even if having received a force from the balls 60, the outer piece 56p will not suffer from damage or the like, and the balls 60 are prevented from dropping off from the endless cyclic path L.

Furthermore, because the block 21 is provided with the inclined surfaces 38A, 38B, the central piece 56q of the scooping piece 56 is formed thick. As a result, even if having received a force from the balls 60, the central piece 56q of the scooping piece 56 will not suffer from damage or the like, and the balls 60 are prevented from dropping off from the endless cyclic path L.

Therefore, according to the aforementioned embodiment, with a simple structure, it is possible to securely protect the scooping piece 56.

Shapes, combinations, and so on of the constituent elements shown in the aforementioned embodiment are exemplary, and various modifications can be made on the basis of design requirements or
the like without departing from the scope of the present invention defined by the appended claims.
The rolling element is not limited to a roller, and may be a ball. The retainer may not be provided.

As for the positioning surfaces 37A, 37B and the positioned surfaces 57A, 57B, it is permissible that either pair is two parallel surfaces. For example, instead of the positioned surface 57B, a protrusion that is to be abutment with the positioning surface 37B may be provided. Even in this case, it is possible to inhibit the end plate 41 from moving in the Y direction and rotating about the X direction with respect to the block 21 (possible to position the end plate 41).

The slider 20 (block 21, end plates 41) may be one that straddle the track rail 10 in a saddle manner.

The number of the endless cyclic paths L is not limited to two, but may be four or the like.

### BRIEF DESCRIPTION OF THE REFERENCE SYMBOLS

1: linear guide (motion apparatus)10: track rail (track element)16: rolling element rolling surface21: block (moving element)22: end face
31: veering path inner circumferential surface (inner circumferential surface)
36: scooping piece container portion
36s: first abutment surface
36t: second abutment surface
38B: inclined surface
41: end plate (cover element)
44: rear surface (opposed surface)
51: veering path outer circumferential surface (outer circumferential surface)
56: scooping piece
56p: outer piece
56q: central piece
56s: outer side surface
56t: front end surface
56v: slit (opening)
60: ball (rolling element)
L: endless cyclic path
L3: rolling element veering path

## Claims

1. A motion apparatus (1), comprising:
a track element (10);
a moving element (20) movable along the track element (10) via a plurality of rolling elements (60); and
cover elements (41) that are attached to end faces (22) of the moving element (20) in directions of movement and form rolling element veering paths (L3) as parts of an endless cyclic path (L),
wherein the cover elements (41) have respective scooping pieces (56) that are provided so as to protrude toward the moving element (20),
wherein the moving element (20) has scooping piece container portions (36) that cover the scooping pieces (56),
**characterised in that** the cover elements (41) form the rolling element veering paths (L3) as parts of more than one endless cyclic path (L),
wherein the respective scooping pieces (56) include a central piece (56q) and outer pieces (56p) on either sides of the central piece (56q),
wherein the central piece (56q) and the outer pieces (56p) are integrally provided and form openings (56v) that are provided correspondingly to the more than one endless cycling paths (L) and that are gradually narrowed toward a side opposite to the side to which the respective scooping piece (56) protrudes, and
wherein the outer pieces (56p) are respectively covered with the scooping piece container portions (36).

2. The motion apparatus according to claim 1,
wherein the scooping piece container portions (36) are respectively provided, as recess portions, in the end faces (22) of the moving element (20) in the directions of movement, and the scooping pieces (56) are inserted in the recess portions.

3. The motion apparatus (1) according to claim 1,
wherein the central piece (56q) is formed so as to be gradually thicker toward a side opposite to the side to which the central piece (56q) protrudes toward the moving element.

## Patentansprüche

1. Bewegungsvorrichtung (1), umfassend:
ein Schienenelement (10);
ein bewegliches Element (20), das entlang des Schienenelements (10) mittels einer Vielzahl von Wälzkörpern (60) beweglich ist; und
Abdeckelemente (41), die in Bewegungsrichtung an den Stirnflächen (22) des beweglichen Elements (20) befestigt sind und als Teil eines endlosen zyklischen Pfades (L) Wälzkörperwendepfade (L3) bilden,
wobei die Abdeckelemente (41) jeweilige Aufnehmstücke (56) aufweisen, die so vorgesehen sind, dass sie in Richtung des beweglichen Elements (20) vorstehen,
wobei das bewegliche Element (20) Behälterabschnitte für die Aufnehmstücke aufweist, die die Aufnehmstücke (56) abdecken,
**dadurch gekennzeichnet, dass**
die Abdeckelemente (41) die Wälzkörperwendepfade (L3) als Teil von mehr als einem endlosen zyklischen Pfad (L) bilden,
wobei die jeweiligen Aufnehmstücke (56) ein Mittelstück (56q) und Außenstücke (56p) auf beiden Seiten des Mittelstücks (56q) beinhalten,
wobei das Mittelstück (56q) und die Außenstücke (56p) integral vorgesehen sind und Öffnungen (56v) bilden, die entsprechend an dem mehr als einem endlosen zyklischen Pfad (L) vorgesehen sind, und welche sich allmählich in Richtung einer Seite gegenüber der Seite verengen, zu der das jeweilige Aufnehmstück (56) vorsteht, und
wobei die äußeren Teile (56p) jeweils mit den Behälterabschnitten der Aufnehmstücke (56) abgedeckt sind.

2. Die Bewegungsvorrichtung nach Anspruch 1,
wobei die Behälterabschnitte (36) des Aufnehmstücks jeweils als Aussparungsabschnitte in den Stirnflächen des beweglichen Elements (20) in Bewegungsrichtung vorgesehen sind und die Aufnehmstücke (56) in die Aussparungsabschnitte eingesetzt sind.

3. Die Bewegungsvorrichtung (1) nach Anspruch 1,
wobei das Mittelstück (56q) so ausgebildet ist, dass es allmählich dicker zu einer Seite hin ist, die der Seite gegenüberliegt, zu der das Mittelstück (56q) in Richtung des beweglichen Elements vorsteht.

## Revendications

1. Appareil de mouvement (1) comportant :
un élément de rail (10) ;
un élément mobile (20) déplaçable le long de l'élément de rail (10) par l'intermédiaire d'une pluralité d'éléments de roulement (60) ; et
des éléments de couverture (41) qui sont attachés à des faces d'extrémité (22) de l'élément mobile (20) dans des directions de mouvement et forment des trajectoires de changement de direction de l'élément de roulement (L3) faisant partie d'une trajectoire cyclique sans fin (L),
où les éléments de couverture (41) comportent des pièces de recueil (56) qui sont prévues de manière à faire saillie en direction de l'élément mobile (20),
où l'élément mobile (20) comporte des parties de réception de pièce de recueil (36) qui couvrent les pièces de recueil (56),
**caractérisé en ce que**
les éléments de couverture (41) forment les trajectoires de changement de direction de l'élément de roulement (L3) en tant que parties de plus d'une trajectoire cyclique sans fin (L),
où les pièces de recueil (56) respectives comprennent une pièce centrale (56q) et des pièces extérieures (56p) des deux côtés de la pièce centrale (56q),
où la pièce centrale (56q) et les pièces extérieures (56p) sont prévues en une pièce et forment des ouvertures (56v) qui sont prévues de manière à correspondre aux plus d'une trajectoires cycliques sans fin (L) et qui se resserrent graduellement vers un côté opposé au côté sur lequel la pièce de recueil (56) respective fait saillie, et
où les pièces extérieures (56p) sont respectivement couvertes par les parties de réception (36) de pièce de recueil.

2. Appareil de mouvement selon la revendication 1,
où les parties de réception (36) de pièce de recueil sont respectivement prévues, en tant que parties d'évidement, dans les faces d'extrémité (22) de l'élément mobile (20) dans les directions de mouvement, et
les pièces de recueil (56) sont insérées dans les parties d'évidement.

3. Appareil de mouvement selon la revendication 1,
où la pièce centrale (56q) est formée de manière à s'épaissir graduellement en direction d'un côté opposé au côté sur lequel la pièce centrale (56q) fait saillie en direction de l'élément mobile.
